# EUROPEAN PATENT SPECIFICATION

(11) **EP 2 452 529 B1**
(45) Date of publication and mention of the grant of the patent: **10.08.2016**
(21) Application number: 10796617.8
(22) Date of filing: 30.06.2010
(51) Int. Cl.: H04W 52/34, H04W 24/10, H04W 52/24, H04W 52/22, H04W 52/26, H04W 52/28

(54) **OPTIMIZING DOWNLINK COMMUNICATIONS BETWEEN A BASE STATION AND A REMOTE TERMINAL BY POWER SHARING**
OPTIMIERUNG DER DOWNLINK-KOMMUNIKATIONEN ZWISCHEN EINER BASISSTATION UND EINEM FERNENDGERÄT DURCH GEMEINSAME NUTZUNG DES STROMS
OPTIMISATION DE COMMUNICATIONS DE LIAISON DESCENDANTE ENTRE UNE STATION DE BASE ET UN TERMINAL DISTANT PAR PARTAGE DE PUISSANCE

(30) Priority: 06.07.2009 US 223148 P
(43) Date of publication of application: 16.05.2012
(73) Proprietor: Apple Inc., Cupertino, CA 95014 (US)
(72) Inventor: YUAN, Jun, Ottawa Ontario K2H 8E9 (CA); FONG, Mo-han, Ottawa Ontario K2H 8E9 (CA)
(74) Representative: Lang, Johannes
(86) International application number: PCT/CA2010/001042
(87) International publication number: WO 2011/003185

(56) References cited:
- WO-A1-2011/003185
- US-A1- 2003 137 950
- US-A1- 2004 081 112
- US-A1- 2004 081 112
- US-A1- 2005 031 047
- US-A1- 2007 248 178
- US-B1- 7 379 478
- YUEMING CAI ET AL: "A comparision of packet scheduling algorithms for OFDMA systems", SIGNAL PROCESSING AND COMMUNICATION SYSTEMS, 2008. ICSPCS 2008. 2ND INTERNATIONAL CONFERENCE ON, IEEE, PISCATAWAY, NJ, USA, 15 December 2008 (2008-12-15), pages 1-5, XP031448726, DOI: 10.1109/ICSPCS.2008.4813724 ISBN: 978-1-4244-4243-0

## Description

### CROSS-REFERENCES TO RELATED APPLICATIONS

This application claims priority from US 61/078,520 filed 07/07/2008 and US 61/223,148 filed 07/06/2009**.**

### BACKGROUND OF THE INVENTION

### 1. Field of Invention

This application relates to optimizing downlink communications between a base station and a remote terminal by power sharing in a wireless communication system, and more particularly to base station controlled power sharing for downlink communications optimization.

### 2. Description of Related Art

Draft IEEE **802.16m** System Description Document, IEEE **802.16m-08/003r1,** dated April **15^{th}, 2008,** was intended to amend the IEEE **802.16** WirelessMAN-OFDMA specification to provide an advanced air interface for operation in licensed bands. The draft was intended to describe provisions that meet the cellular layer requirements of IMT-Advanced next generation mobile networks and provide continuing support for legacy WirelessMAN-OFDMA equipment. In addition, the purpose of the draft was to provide performance improvements necessary to support future advanced services and applications, such as those described by the ITU in Report ITU-R M.**2072.**

The proposal provided in the draft however, leaves many things to be desired. For example, one objective in accordance with the standard may be to minimize total power resource units subject to total power control per base station and minimum signal to noise requirements for scheduled users. Meeting this objective presents a nonlinear optimization problem, which is difficult to solve. In particular two main issues arise: feasibility and optimality. in other words the optimal power plan must be feasible.

US 2007/248178 A1 discloses a proportional fair scheduler for OFDMA wireless systems.

US 2004/081112 A1 discloses techniques for stealing power or channelization code for data channel operations.

US 2003/137950 A1 discloses a method and an apparatus for redistributing differentiated power for transmitting high speed packet data according to UEs in high speed packet data transport system. The method and apparatus redistribute powers, which have been already assigned in order to transmit the high speed packet data, thereby improving the performance of the system.

### SUMMARY OF THE INVENTION

In accordance with one aspect of the invention there is provided a method of optimizing downlink for communications between a base station and mobile stations in a wireless communication system. The method involves acquiring user identifiers and geometry values for the mobile stations that are associated with registered users of the system. The method also involves associating modulation control scheme (MCS) power values with respective users in response to respective geometry values, initializing a power pool, identifying users that have an MCS power value greater than a reference MCS power value as high power users and calculating a power difference for each of the high power users. The power difference is a difference between the geometry value associated with each of the high power users and a reference geometry value associated with the reference MCS power value respectively. The method further involves accumulating in the power pool, the power differences associated with respective high power users, by summing the power differences. The method further involves identifying users that have an MCS power value below the reference MCS power value as low power users, associating increased geometry values with at least some of the low power users while depleting the power pool by corresponding amounts until the power pool is depleted, determining new MCSs for at least some of the low power users based on the increased geometry values and causing control information to be transmitted to the low power users using modulation and control schemes identified by corresponding new MCSs at power levels associated with the new MCSs.

The geometry values may include signal to noise ratio values.

The signal to noise ratio may be represented by signal to noise values received from mobile stations.

Associating MCS power values may involve assigning MCS power values according to ranges in which the geometry values reside.

The method may further involve sorting user identifiers in order of increasing or decreasing geometry values.

Associating the increased geometry values to at least some of the low power users may involve associating the reference geometry value to the low power users in order of increasing geometry.

The reference MCS power value may be a highest MCS power value required for downlink control.

Causing control information to be transmitted to the low power users wherein to be transmitted may involve causing a control system of the base station to produce a frame involving a control patch for transmission to the registered users using the new MCSs and power levels associated therewith.

The method may further involve assigning a reference MCS corresponding to the reference MCS power value to the high power users and causing communications with the high power users to be conducted using the reference MCS.

In accordance with another aspect of the invention, there is provided a computer-readable medium encoded with codes for directing a processor circuit to carry out any of the methods described above.

In accordance with another aspect of the invention there is provided an apparatus for optimizing downlink communications between a base station and mobile stations in a wireless communication system. The apparatus includes an input for receiving user identifiers and geometry values for mobile stations that are associated with registered users of the system. The apparatus also includes a processor circuit in communication with the input, the processor circuit being operably configured to associate modulation control scheme (MCS) power values with respective users in response to respective geometry values, initialize a power pool, identify users that have an MCS power value greater than a reference MCS power value as high power users, and calculate a power difference for each of the high power users. The power difference is a difference between the geometry value associated with each of the high power users and a reference geometry value associated with the reference MCS respectively. The processor circuit is also operably configured to accumulate in the power pool, the power differences associated with respective high power users, by summing the power differences, and to identify users that have an MCS power value below the reference MCS power value as low power users, and to associate increased geometry values with at least some of the low power users while depleting the power pool by corresponding amounts until the power pool is depleted. The processor circuit is also operably configured to determine new MCSs for at least some of the low power users based on the increased geometry values. The apparatus further includes an output in communication with the processor circuit for providing signals for causing control information to be transmitted to the low power users using modulation and control schemes identified by corresponding new MCSs at power levels associated with the new MCSs.

The geometry values may include signal to noise ratio values.

The signal to noise ratio may be represented by signal to noise ratio values received from mobile stations.

The processor circuit may be operably configured to associate MCS power values with users according to ranges in which the geometry values reside.

The processor circuit may be operably configured to sort user identifiers in order of increasing or decreasing geometry values.

Associating increased geometry values to at least some of the low power users may include associating the reference geometry value to the low power users in order of increasing geometry.

The reference MCS power value may be a highest MCS power value required for downlink control.

The processor circuit may be operably configured to produce signals representing a frame including a control patch for transmission to the registered users according to the new MCSs at power levels associated with the new MCSs.

The processor circuit may be operably configured to assign a reference MCS corresponding to the reference MCS power value to the high power users and to cause the control patch to be transmitted to the high power users using the reference MCS and associated power level.

The apparatus may further include a base station in a wireless communication system.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present application will now be described, by way of example only, with reference to the accompanying drawing figures, wherein:
- Figure **1**: is a block diagram of a generic cellular communication system in which aspects of the present invention may be implemented;
- Figure **2**: is a block diagram of a base station depicted in Figure 1;
- Figure **3**: is a block diagram of a wireless terminal depicted in Figure 1;
- Figure **4**: is a block diagram of an example relay station depicted in Figure **1****;**
- Figure **5**: is a block diagram of a logical breakdown of an example OFDM transmitter of the base station shown in Figure **2****;**
- Figure **6**: is a block diagram of a logical breakdown of an example OFDM receiver of the wireless terminal shown in Figure **3****;**

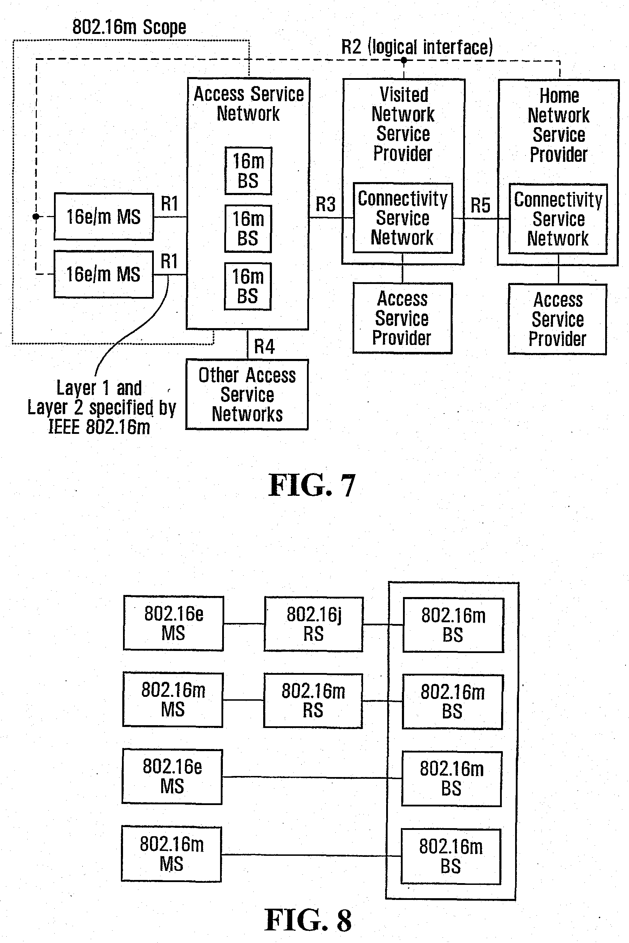

- Figure **7**: is a schematic diagram of a network architecture implemented by the cellular communication system shown in Figure **1** and corresponds to Figure **1** of IEEE **802.16m-08/003r1;**
- Figure **8**: is a schematic diagram of an architecture of the Relay Station shown in Figure **4** and corresponds to Figure **2** of IEEE **802.16m-08/003r1;**

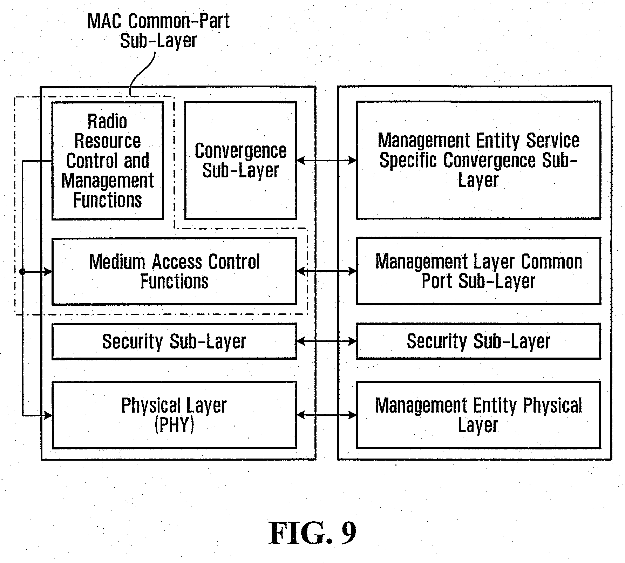

- Figure **9**: is a schematic representation of a System Reference Model of the cellular communication system shown in Figure **1** and corresponds to Figure **3** of IEEE **802.16m-08/003r1;**
- Figure **10**: is a schematic representation of a Protocol Structure in accordance with IEEE **802.16m** and corresponds to Figure **4** of IEEE **802.16m-08/003r1;**

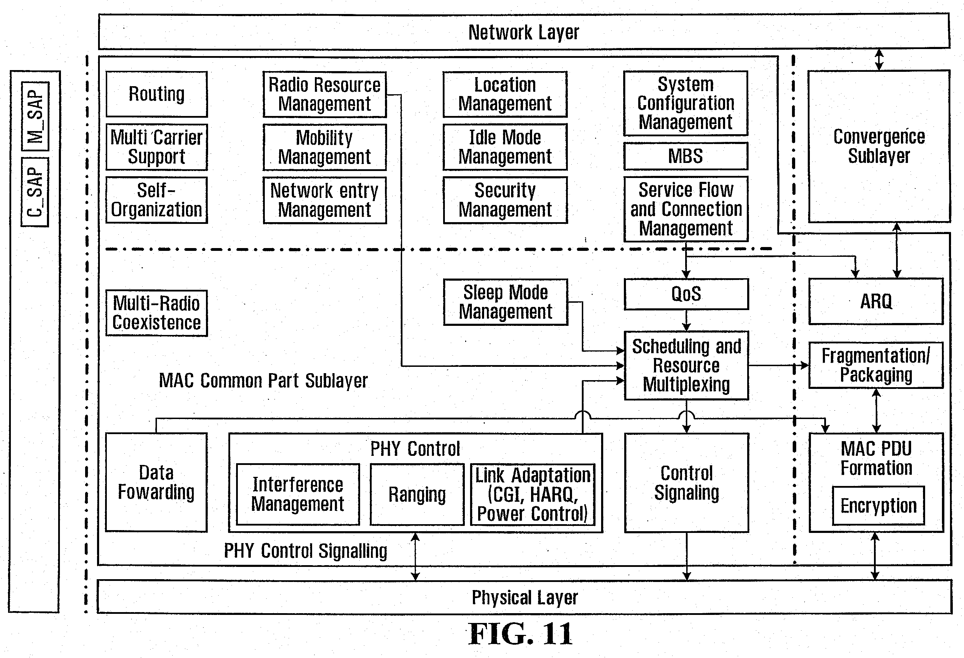

- Figure **11**: is a Processing Flow diagram of a MS/BS Data Plane in accordance with IEEE **802.16m** and corresponds to Figure **5** of IEEE **802.16m-08/003r1;**

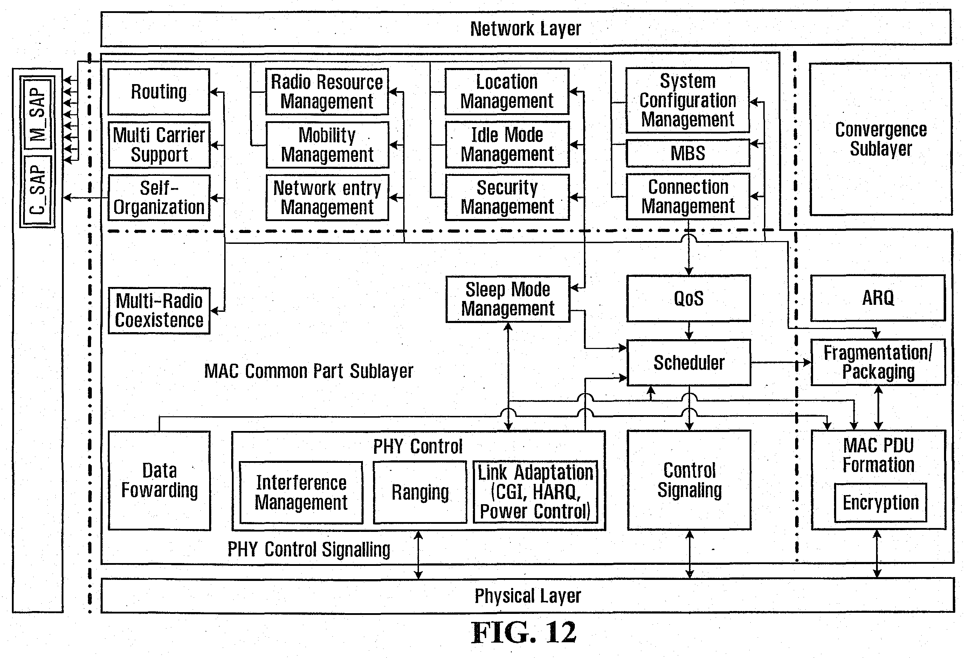

- Figure **12**: **is** a Processing Flow diagram of the MS/BS Control Plane in accordance with IEEE **802.16m** and corresponds to Figure **6** of IEEE **802.16m-08/003rl;** and

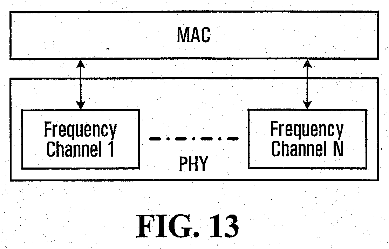

- Figure **13**: **is** a schematic representation of a Generic protocol architecture **to** support a multicarrier system and corresponds to Figure **7** of IEEE **802.16m-08/003rl.**
- Figure **14**: **is** a flow chart of a process executed by a control processor of a base station for affecting downlink optimization between the base station and mobile stations in the communications system shown in Figure **1** according to a first embodiment of the invention.
- Figure **15**: is a tabular representation of data input to the process shown in Figure **14****.**
- Figure **16**: is a reference table used by the processor in executing the process shown in Figure **14****.**
- Figure **17**: is a tabular representation of modular control scheme (MCS) power values assigned to the input shown in Figure **14** in accordance with the reference table shown in Figure **16****.**
- Figure **18**: is the table of Figure **17** shown sorted in descending order.
- Figure **19**: is a tabular representation of determining power differences and accumulating said differences in a power pool.
- Figure **20**: is a tabular representation of reallocating power from the power pool to low-power users.
- Figure **21**: is a tabular representation of associating new MCS power values according to the new geometry shown in Figure **20****.**
- Figure **22**: is a tabular representation of an assignment of target modulation control schemes according to new geometry shown in Figure **20****.**
- Figure **23**: is a tabular representation of data produced by the process shown in Figure **14****.**
- Figure **24**: is a schematic representation of an OFDMA frame containing the data shown in Figure **23** to optimize power usage to the mobile stations.
- Figure **25**: is a tabular representation of a calculation of power differences and accumulating such power differences in the power pool, according to a second embodiment of the invention.
- Figure **26**: is a tabular representation of assigning power from the power pool to low-power users to increase the geometry of low-power users, according to the second embodiment.
- Figure **27**: is a tabular representation of new target geometry values associated with respective users, according to the second embodiment.
- Figure **28**: is a tabular representation of associating new MCS power values with the new geometry values of Figure **27** and associating target modulation control schemes according to the new MCS power values.
- Figure **29**: is a tabular representation of output data produced by executing the process of Figure **14** in accordance with the second embodiment of the invention, the output data shown in Figure **29** being included within the OFDMA frame shown in Figure **24** in accordance with the second embodiment of the invention for communicating new modulation control schemes that optimize power usage to the mobile stations.

Like reference numerals are used in different figures to denote similar elements.

### DETAILED DESCRIPTION

### WIRELESS SYSTEM OVERVIEW

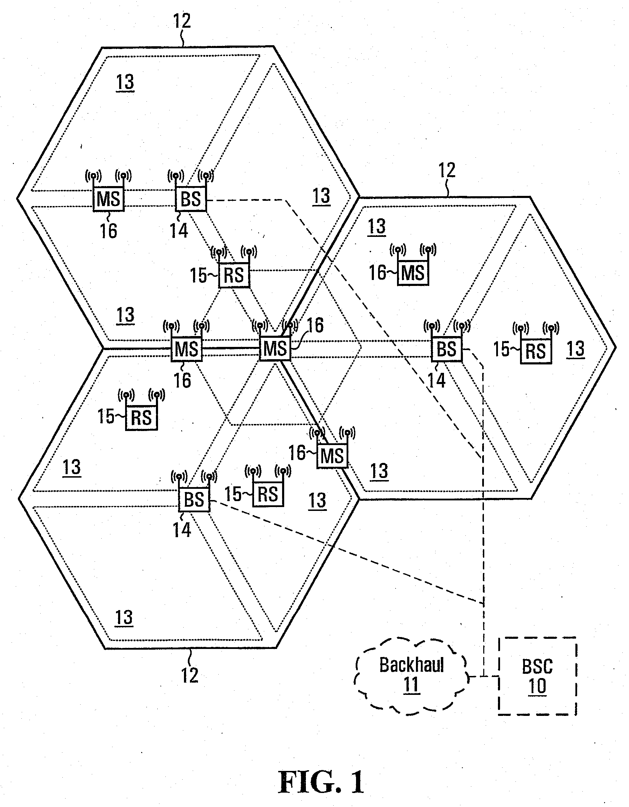

Referring to the drawings, Figure **1** shows a base station controller (BSC) **10** which controls wireless communications within multiple cells **12,** which cells are served by corresponding base stations (BS) **14.** In some configurations, each cell is further divided into multiple sectors **13** or zones (not shown). In general, each base station **14** facilitates communications using Orthogonal Frequency-Division Multiplexing (OFDM) digital modulation scheme with mobile stations (MS) and/or wireless terminals **16,** which are within the cell **12** associated with the corresponding base station **14.**

Movement of the mobile stations **16** in relation to the base stations **14** results in significant fluctuation in channel conditions. As illustrated, the base stations **14** and the mobile stations **16** may include multiple antennas to provide spatial diversity for communications. In some configurations, relay stations **15** may assist in communications between the base stations **14** and the mobile stations **16.** The mobile stations **16** can be handed off from any of the cells **12,** the sectors **13,** the zones (not shown), the base stations **14** or the relay stations **15** to another one of the cells **12,** the sectors **13,** the zones (not shown), the base stations **14** or the relay stations **15.** In some configurations, the base stations **14** communicate with each other and with another network (such as a core network or the internet, both not shown) over a backhaul network **11.** In some configurations, the base station controller **10** is not needed.

### Base Station

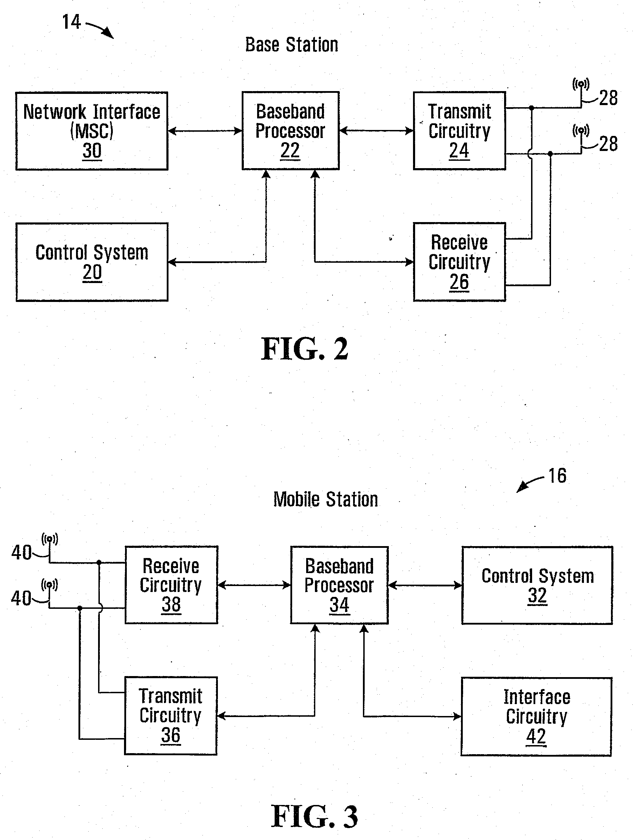

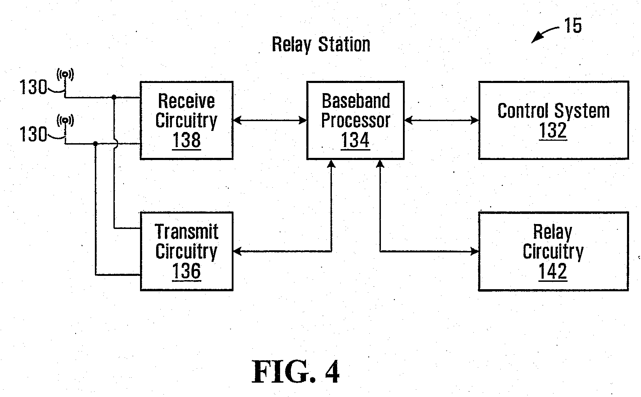

With reference to Figure **2****,** an example of a base station **14** is illustrated. The base station **14** generally include a control system **20,** a baseband processor **22,** transmit circuitry **24,** receive circuitry **26,** multiple transmit antennas **28,** and a network interface **30.** The receive circuitry **26** receives radio frequency signals bearing information from one or more remote transmitters provided by the mobile stations **16** (illustrated in Figure **3**) and the relay stations **15** (illustrated in Figure **4**). A low noise amplifier and a filter (not shown) may cooperate to amplify and remove broadband interference from the received signal for processing. Downconversion and digitization circuitry (not shown) will then downconvert the filtered, received signal to an intermediate or baseband frequency signal, which is then digitized into one or more digital streams.

The baseband processor **22** processes the digitized streams to extract the information or data bits conveyed in the received signal. This processing typically comprises demodulation, decoding, and error correction operations. As such, the baseband processor **22** is generally implemented in one or more digital signal processors (DSPs) or application-specific integrated circuits (ASICs). The information is then sent across a wireless network via the network interface **30** or transmitted to another one of the mobile stations **16** serviced by the base station **14,** either directly or with the assistance of one of the relay stations **15.**

To perform transmitting functions, the baseband processor **22** receives digitized data, which may represent voice, data, or control information, from the network interface **30** under the control of the control system **20,** and produces encoded data for transmission. The encoded data is output to the transmit circuitry **24,** where it is modulated by one or more carrier signals having a desired transmit frequency or frequencies. A power amplifier (not shown) will amplify the modulated carrier signals to a level appropriate for transmission, and deliver the modulated carrier signals to the transmit antennas **28** through a matching network (not shown). Modulation and processing details are described in greater detail below.

### Mobile Station

With reference to Figure **3****,** an example of a mobile station **16** is illustrated. Similarly to the base stations **14,** the mobile station **16** includes a control system **32,** a baseband processor **34,** transmit circuitry **36,** receive circuitry **38,** multiple receive antennas **40,** and user interface circuitry **42.** The receive circuitry **38** receives radio frequency signals bearing information from one or more of the base stations **14** and the relay stations **15.** A low noise amplifier and a filter (not shown) may cooperate to amplify and remove broadband interference from the signal for processing. Downconversion and digitization circuitry (not shown) will then downconvert the filtered, received signal to an intermediate or baseband frequency signal, which is then digitized into one or more digital streams.

The baseband processor **34** processes the digitized streams to extract information or data bits conveyed in the signal. This processing typically comprises demodulation, decoding, and error correction operations. The baseband processor **34** is generally implemented in one or more digital signal processors (DSPs) and application specific integrated circuits (ASICs).

For transmission, the baseband processor **34** receives digitized data, which may represent voice, video, data, or control information, from the control system **32,** which it encodes for transmission. The encoded data is output to the transmit circuitry **36,** where it is used by a modulator to modulate one or more carrier signals at a desired transmit frequency or frequencies. A power amplifier (not shown) amplifies the modulated carrier signals to a level appropriate for transmission, and delivers the modulated carrier signal to the receive antennas **40** through a matching network (not shown). Various modulation and processing techniques available to those skilled in the art may be used for signal transmission between the mobile stations **16** and the base stations **14,** either directly or via the relay stations **15.**

### OFDM Modulation

In OFDM modulation, the transmission band is divided into multiple, orthogonal carrier waves. Each carrier wave is modulated according to the digital data to be transmitted. Because OFDM divides the transmission band into multiple carriers, the bandwidth per carrier decreases and the modulation time per carrier increases. Since the multiple carriers are transmitted in parallel, the transmission rate for the digital data, or symbols, on any given carrier is lower than when a single carrier is used.

OFDM modulation includes the use of an Inverse Fast Fourier Transform (IFFT) on the information to be transmitted. For demodulation, a Fast Fourier Transform (FFT) is performed on the received signal to recover the transmitted information. In practice, the IFFT and FFT are provided by digital signal processing involving an Inverse Discrete Fourier Transform (IDFT) and Discrete Fourier Transform (DFT), respectively. Accordingly, a characterizing feature of OFDM modulation is that orthogonal carrier waves are generated for multiple bands within a transmission channel. The modulated signals are digital signals having a relatively low transmission rate and capable of staying within their respective bands. The individual carrier waves are not modulated directly by the digital signals. Instead, all carrier waves are modulated at once by IFFT processing.

In operation, OFDM is preferably used for at least downlink transmission from the base stations **14** to the mobile stations **16.** Each of the base stations **14** is equipped with "n" of the transmit antennas **28** (n>=1), and each of the mobile stations **16** is equipped with "m" of the receive antennas **40** (m>=1), Notably, the respective antennas can be used for reception and transmission using appropriate duplexers or switches and are so labelled only for clarity.

When the relay stations **15** are used, OFDM is preferably used for downlink transmission from the base stations **14** to the relay stations and from the relay stations to the mobile stations **16.**

### Relay Station

With reference to Figure **4****,** an exemplary relay station **15** is illustrated. Similarly to the base stations **14,** and the mobile stations **16,** the relay station **15** includes a control system **132,** a baseband processor **134,** transmit circuitry **136,** receive circuitry **138,** multiple antennas **130,** and relay circuitry **142.** The relay circuitry **142** enables the relay station **15** to assist in communications between one of the base stations **14** and one of the mobile stations **16.** The receive circuitry **138** receives radio frequency signals bearing information from one or more of the base stations **14** and the mobile stations **16.** A low noise amplifier and a filter (not shown) may cooperate to amplify and remove broadband interference from the signal for processing, Downconversion and digitization circuitry (not shown) will then downconvert the filtered, received signal to an intermediate or baseband frequency signal, which is then digitized into one or more digital streams.

The baseband processor **134** processes the digital streams to extract information or data bits conveyed in the signal. This processing typically comprises demodulation, decoding, and error correction operations. The baseband processor **134** is generally implemented in one or more digital signal processors (DSPs) and application specific integrated circuits (ASICs). For transmission, the baseband processor **134** receives digitized data, which may represent voice, video, data, or control information, from the control system **132,** which it encodes for transmission. The encoded data is output to the transmit circuitry **136,** where it is used by a modulator to modulate one or more carrier signals at a desired transmit frequency or frequencies. A power amplifier (not shown) will amplify the modulated carrier signals to a level appropriate for transmission, and deliver the modulated carrier signal to the antennas **130** through a matching network (not shown). Various modulation and processing techniques available to those skilled in the art may be used for signal transmission between the mobile stations **16** and the base stations **14,** either directly or indirectly via the relay stations **15,** as described above.

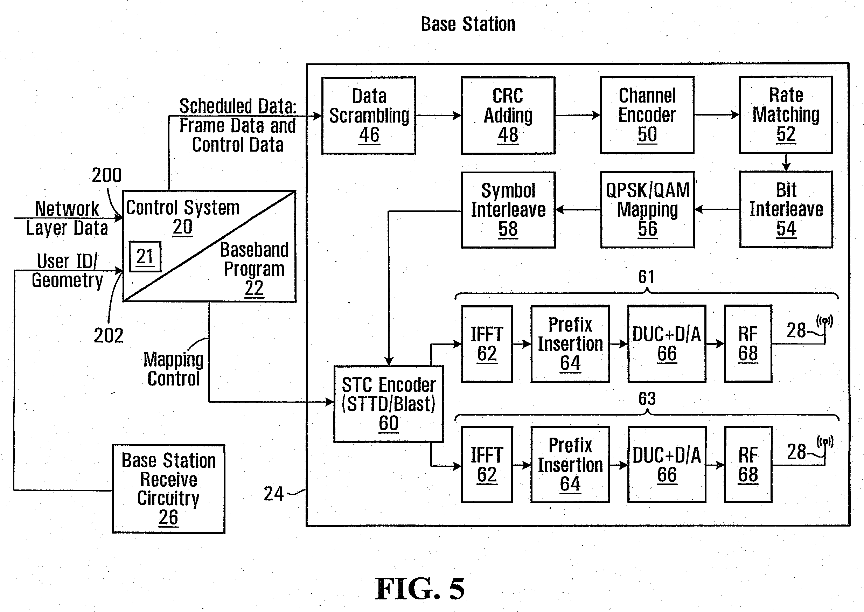

With reference to Figure **5****,** a logical OFDM transmission architecture will be described. Referring to Figure **1****,** initially, the base station controller **10** will send data to be transmitted to various ones of the mobile stations **16** to the base stations **14,** either directly or with the assistance of one of the relay stations **15.** The base stations **14** may use channel quality indicators (CQIs) associated with the mobile stations **16** to schedule the data for transmission and to select appropriate coding and modulation for transmitting the scheduled data. For example, in accordance with one embodiment of the invention, knowledge of scheduled users and their geometry or signal to noise ratio (SNR) is used to assign a Modulation and Coding Scheme (MCS) for a given OFDM frame. The CQIs may be provided directly by the mobile stations **16** or may be determined by the base stations **14** based on information provided by the mobile stations. In either case, the CQI for each of the mobile stations **16** is a function of the degree to which the channel amplitude (or response) varies across the OFDM frequency band. The CQI may include a geometry value such as a signal to noise ratio, for example, representing the signal to noise ratio of the signal received at one of the mobile stations **16.**

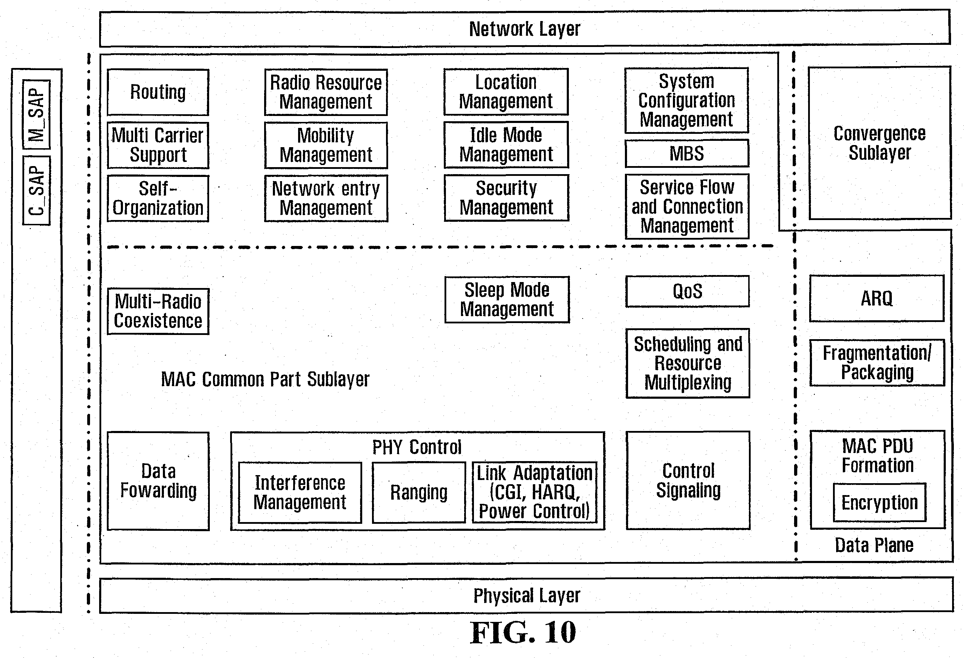

Referring to Figure **5****,** the control system **20,** the baseband processor **22** and the transmit circuitry **24** are shown functionally in greater detail. The control system **20,** among other things, implements a media access control function shown broadly in Figure **10****,** for interfacing a network layer with a physical layer of the communication system. Accordingly, the control system **20** includes a network layer data input **200** and a user ID/Geometry input **202.** These inputs may include registers (not shown) into which interface processors (not shown) may place data for use by the control system **20.** Data received at the network layer data input **200** includes data such as video, audio etc. that may be passed between users, through the wireless system. Data received at the user ID/Geometry input **202** is received from the receive circuitry **26** and includes user identification data and geometry data associated with corresponding identified users that are registered with the wireless system.

Registering with the wireless system may occur in conventional manners such as by logging the entry of the user into one of the cells **12** served by one of the base stations **14,** for example. Geometry data may include signal to noise ratio information provided by one of the mobile stations **16** itself, or may include positional information such as may be provided by location fixing functions such as GPS receivers in the mobile stations or through position extrapolation techniques carried out by the base stations **14.** In any event the geometry data represents essentially the power used to transmit signals to one of the mobile stations.

The control system **20** includes a processor circuit **21** that executes the functions of the above-described medium access control aspect of the control system and in accordance with one embodiment of the invention executes certain additional functions to effect downlink optimization. In one embodiment these additional functions may be provided by augmenting the functionality provided to effect radio resource management and/or scheduling and resource multiplexing shown in Figure **10****.**

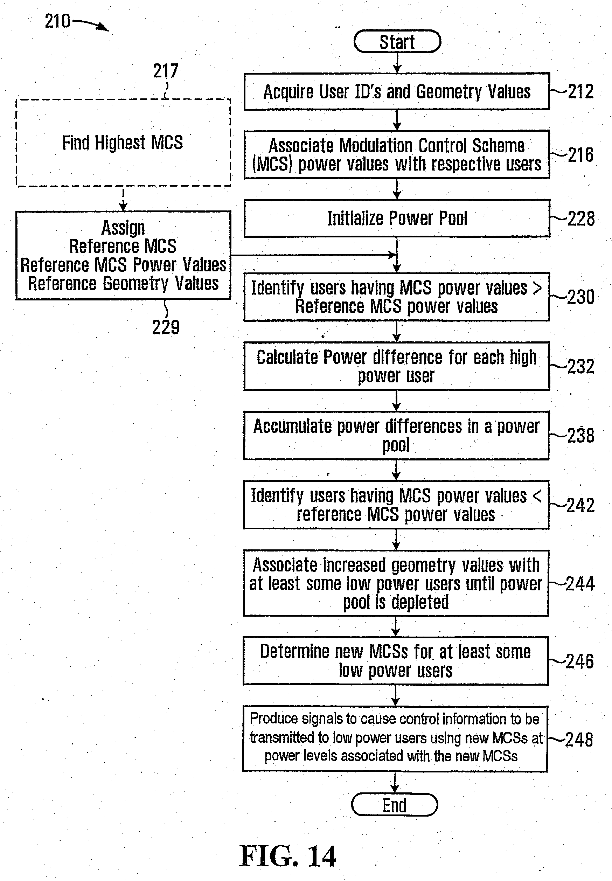

In one embodiment, the processor circuit **21** is controlled by codes that may be stored on a computer readable medium and executable by the processor circuit. These codes may be represented by functional blocks as shown in Figure **14****.**

Referring to Figure **14****,** in accordance with one embodiment of the invention, a process executed by the processor circuit **21** in one of the base stations **14** is shown generally at **210.**

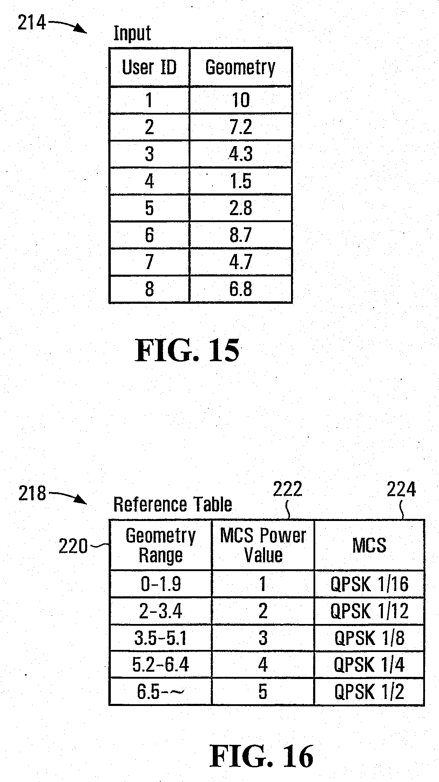

The process begins with block **212** that directs the processor circuit **21** to acquire user IDs and geometry values from the user ID/geometry input **202** shown in Figure **5****.** Referring to Figure **15****,** the user IDs and geometry values may be represented in a table, for example, as shown generally at **214** where, in essence, the user ID and corresponding geometry are provided as number pairs. Referring back to Figure **14****,** block **216** directs the processor circuit to associate modulation control scheme (MCS) power values with respective users in response to respective geometry values.

To do this, referring to Figure **16****,** the processor circuit **21** maintains a reference table **218** comprising a geometry range column **220,** an MCS power value column **222** and an MCS column **224.** The geometry range column **220** includes rows containing numbered pairs representing a range of geometry values that are to be associated with a corresponding MCS power value on the same row of the MCS power value column **222.** Thus, for example geometry range **0** to **1.9** is associated with MCS power value **1.** In addition, the MCS column **224** associates modulation and coding schemes with respective geometry ranges and MCS power values on the same row. Thus, for example the geometry range **0** to **1.9** and MCS power value **1** are associated with modulation and coding scheme QPSK **1/16.** Thus, given a geometry from the table shown at **214,** the range in which the geometry falls can be found in the geometry range column **220** to determine a row and from that row a corresponding MCS power value can be found from the MCS power value column **222** and corresponding modulation and coding scheme can be found from the MCS column **224.**

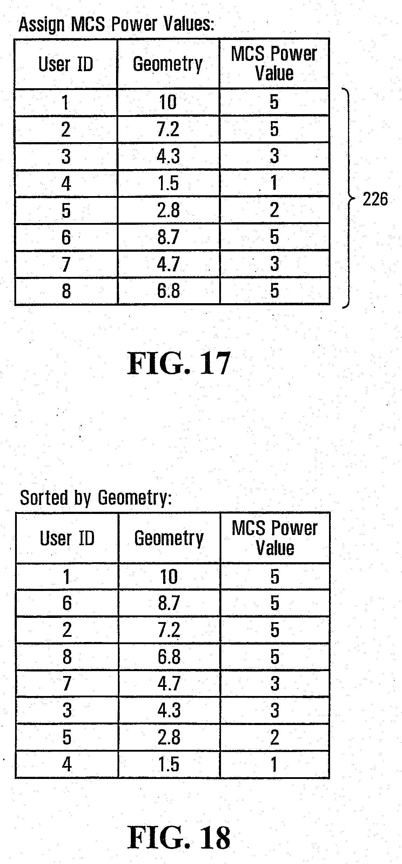

Referring to Figure **17****,** using the geometry values for each of the eight exemplary users depicted in Figure **15****,** MCS power values are assigned as shown at **226** in Figure **17****.**

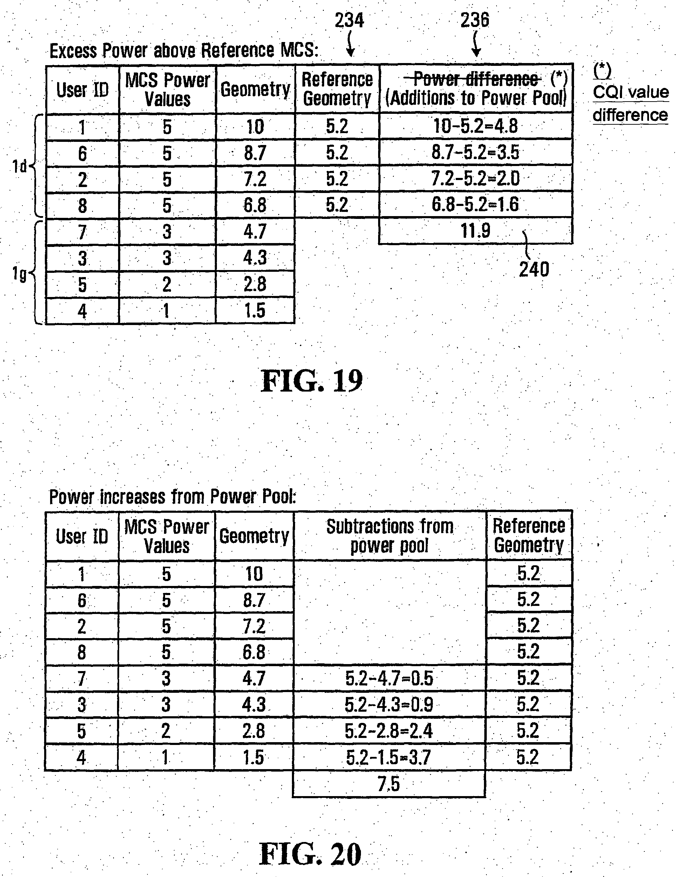

Referring back to Figure **14****,** block **228** directs the processor to initialize a power pool. The power pool may be implemented by simply causing the processor circuit **21** to establish a power pool buffer in memory. The power pool buffer is shown at **240** in Figure **19****.**

Next, block **230** directs the processor circuit **21** to identify users having a MCS power value greater than a reference MCS power value. The reference MCS power value may be selected in a plurality of ways. For example, it may be re-programmed or supplied by other processor circuits or the same processor circuit **21** under control of a different algorithm. In the embodiments shown, the reference MCS power value is one of the MCS power values listed in the reference table **218** shown in Figure **16****.** In this embodiment a pre-defined highest MCS power value suitable for downlink communications is selected and in this embodiment assume that MCS power value is **4,** corresponding to a QPSK'/ modulation and coding scheme and corresponding to a geometry range of **5.2** to **6.4.** In this embodiment an end point of the geometry range establishes a reference geometry value. For example, the reference geometry value may be **5.2,** for an MCS power value of **4.**

Referring back to Figure **14** and further referring to Figure **18****,** to facilitate easy identification of users having MCS power values greater than the reference MCS power value the number pairs representing user ID and geometry may be sorted in order of ascending or descending geometry. In the embodiments shown in Figure **18****,** geometry values are sorted in descending order.

Referring to Figure **14****,** block **232** causes the processor circuit **21** to calculate a power difference for each of the high power users, the power difference being a difference between the geometry value associated with a given high power user and the reference geometry value. This is seen best in Figure **19** in which the sorted user ID, MCS power value and geometry tuples for the high power users are shown adjacent a partial column of reference geometry values and further adjacent is a column **236** of power difference values and an indication of the calculations used to find such power difference values.

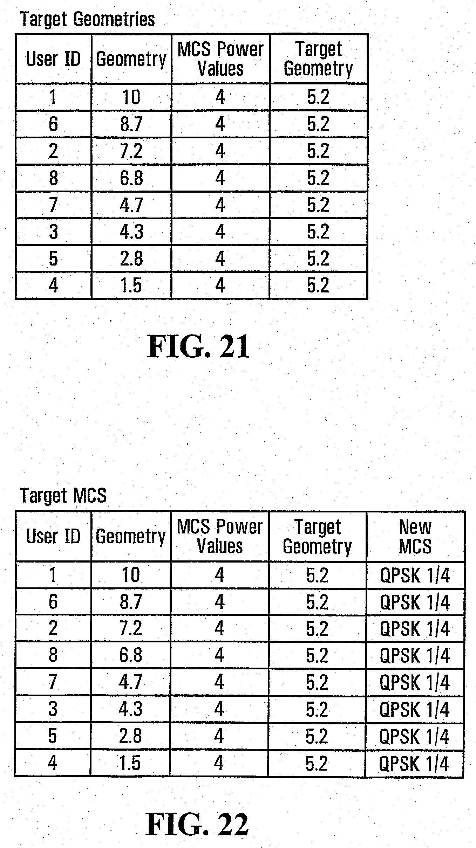

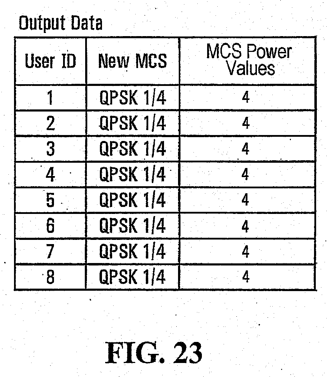

Referring back to Figure **14****,** block **238** directs the processor circuit **21** to accumulate the power differences in the power pool. Referring to Figure **19****,** the contents of the power pool are stored in the power pool buffer shown generally at **240** and in this embodiment amount to a total of **11.9** geometry geometry values, or quality values. This means that **11.9** geometry values, or quality values represent excess power being used by high power users served by the base station **14**, which could be used by other users served by the same base station to improve their geometry if the high power users were directed to use the modulation and coding scheme and associated power associated with the reference geometry value and lower power users are directed to use modulation and coding schemes and associated powers that will provide better geometry values to improve control transmission reliability and power efficiency. Accordingly, referring back to Figure **14** block **242** directs the processor circuit **21** to identify users having an MCS power value less than the reference MCS power value Referring to Figures **18****,** **19** and **20** it can be seen that the **4** users in the bottom half of the tables shown are low power users. Referring to Figure **14****,** block **244** directs the processor circuit 2**1** to associate increased geometry values with at least some of the low power users while depleting the power pool by corresponding amounts, until the power pool is depleted. This is best seen in Figure 20 where the geometry values of the low power users are subtracted from the reference geometry values to obtain a subtraction amount for that user, the subtraction amount representing a portion of the power pool that can be allocated to that user to try to bring the geometry of that user up to the reference geometry value. Thus, for example, each of users **7, 3, 5,** and **4** has a respective subtraction amount, the total of which adds up to **7.5,** which is less than the **11.9** stored in the power pool buffer **240** shown in Figure **19****.** Therefore it can be seen that if the high power users are caused to have a new target geometry corresponding to the reference geometry (**5.2**), the low. power users can also be caused to have a target geometry corresponding to the reference geometry value and there may be power to spare. Accordingly, referring back to Figure **14****,** block **246** directs the processor circuit **21** to determine new modulation coding schemes and associated power for the low power users based on increased geometry values i.e. target geometry values (**5.2**) now associated with the low power users. Thus, since the target geometry of **5.2** is associated with an MCS power value of **4,** the MCS power value **4** is now associated with each of the users, as seen in Figure **21****.** Knowing the MCS power value associated with each user, a corresponding target MCS can be determined from the reference table **218** shown in Figure **16** and corresponding new modulation coding schemes are associated with corresponding users as shown in Figure **22****.** Thus, output data representing user IDs and corresponding new modulation coding schemes and associated MCS power levels can be represented as shown in Figure **23****.**

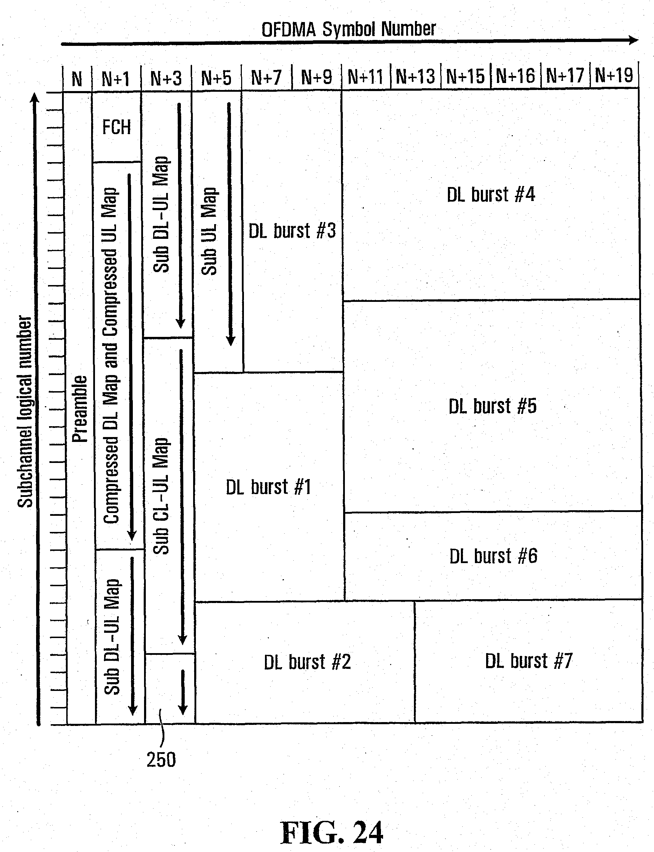

Referring back to Figure **14****,** block **248** directs the processor circuit to produce signals to cause control information to be transmitted to the low power users (and also the high power users) using modulation and control schemes identified by corresponding new modulation and control schemes at power levels associated with the new MCSs, shown in Figure **22****.** These signals may be produced in the format of a conventional sub-map burst frame as shown in Figure **24** in which at least one control patch such as shown at **250** in Figure **24** includes information identifying users and corresponding modulation and control schemes to be used by the base station **14** for control communications with the mobile stations **16.** Referring back to Figure **5****,** this frame is provided to the transmit circuitry **24** as scheduled data **44.**

In the embodiment described above, the reference geometry value, the reference MCS power value and a corresponding reference MCS were predefined. It is also possible however to set the reference geometry value, the reference MCS and the reference MCS power value according to the geometries of the users, as discussed below, in accordance with a second embodiment of the invention. For example, after sorting the user ID, geometry value and MCS power value tuples by geometry value, as shown in Figure **18****,** the highest geometry value of **10** can be compared to the reference table **218** shown in Figure **16** to determine that the MCS power value is **5,** the corresponding MCS is QPSK ½, and the low end of the geometry range for this MCS power value is **6.5.** Thus, after executing block **216** in Figure **14****,** for example, where MCSs and MCS power values are associated with respective users, the processor circuit **21** may be directed to execute optional block **217** which directs the processor circuit to find the highest MCS by comparing the highest geometry value of the users with the geometry range values in the reference table shown in Figure **16** to determine a geometry range. Then, once the geometry range is known, a corresponding MCS power value is known and a corresponding highest MCS is known from the reference table **218.**

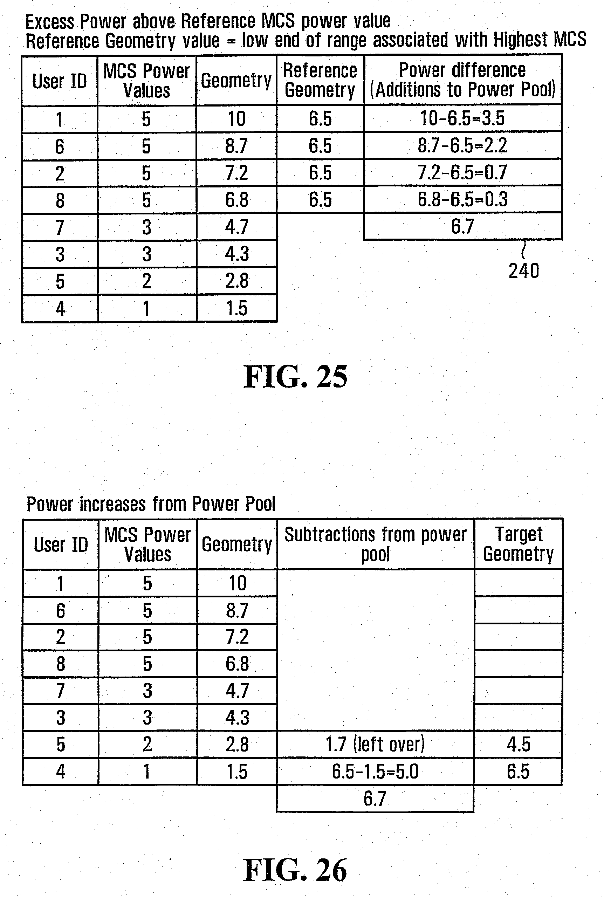

Then the processor circuit **21** is directed to block **229** which causes the processor circuit to assign as the reference MCS the highest MCS found at block **217** and to assign as the reference MCS power value, the corresponding MCS power value from the reference table **218** and to assign as the reference geometry value, the low end of the geometry range associated with that highest MCS power value. Then, processing continues as described above at block **230.** Referring to Figure **14** and Figure **25****,** it can be seen that the reference geometry (**6.5**) is much higher than the earlier predefined reference geometry **5.2** of the first embodiment and therefore the additions to the power pool are much less, amounting to a total power pool value of **6.7,** as shown at the power pool buffer **240.**

Referring to Figures **14** and **26****,** when the processor circuit **21** is directed to block **244** to associate increased geometry values with at least some of the low power users until the power pool is depleted, the processor circuit starts with the user having the least geometry value (in this case **1.5**) and calculates an amount (**5.0**) which must be taken from the power pool stored in the power pool buffer **240** shown in Figure **25** to attempt to provide the corresponding user (user **4**) with a target geometry equal to the reference geometry value of **6.5.** After taking **5.0** geometry values, or quality values from the power pool, **1.7** geometry values, or quality values are left over and these may be assigned to the user with the next highest geometry value, in this case user **5.** User **5** however only has a present geometry value of **2.8** and if the **1.7** from the power pool is added to this **2.8** the result is **4.5.** This new geometry value of **4.5** is still an increase over the original geometry value of **2.8** and therefore a new target geometry value of **4.5** is associated with user **5.** Thus, users **4** and **5** are given increased target geometry values.

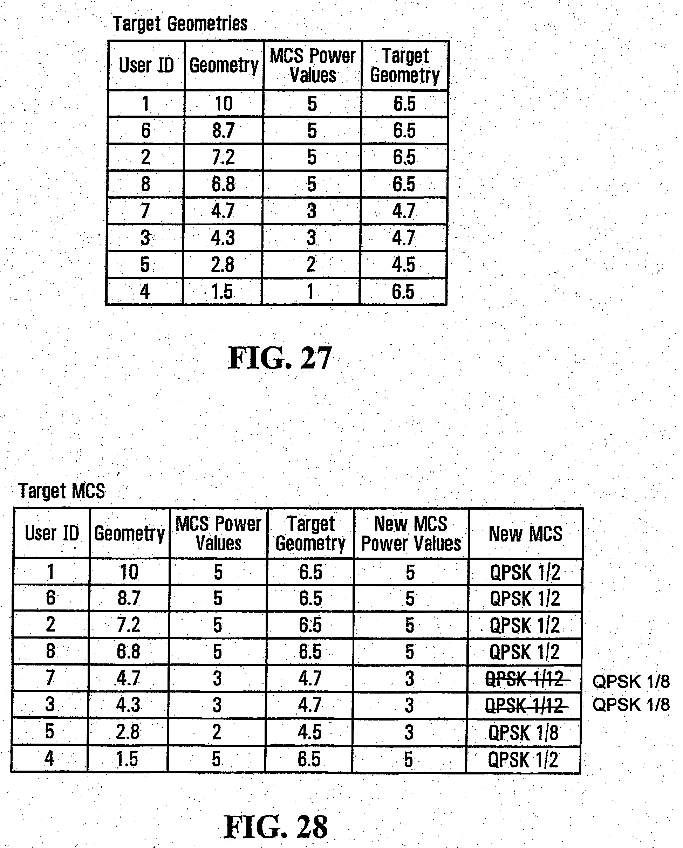

Referring now to Figure **27****,** the reference geometry values have been associated with the high power users and the two lowest low power users have had their target geometry values increased while the target geometries of users **7** and **3** remain the same at **4.7.** Thus, various users have different target geometries but, at least two of the low power users have had their target geometries increased. Using these new target geometries and the reference table **218** shown in Figure **16****,** block **246** of Figure **14** is executed to compare the new target geometries with the geometry ranges of the reference table. It can be seen that the corresponding MCS power values are **5** for the high power users and for user **4** which was once the lowest of the low power users and an MCS power value of **3** is maintained for users **7** and **3** (i.e. no change) and an MCS power value of **3** is associated with user **5,** which is an increase of **1** MCS power value over its original MCS power value. Thus, the new MCSs for these users remains the same for the high power users, is increased to the same as the high power users for the lowest of the low power users and is increased by one category for the second lowest of the low power users (i.e. user **5**) and the MCS remains the same for users **7** and **3**. Thus, at least some of the low power users have had their MCS increased.

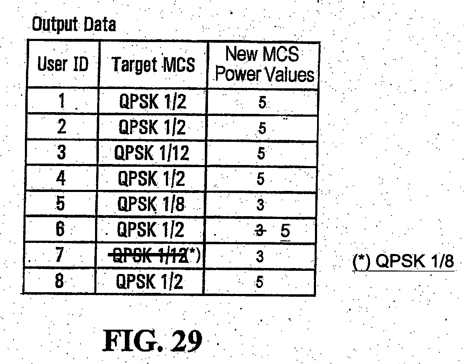

Referring to Figure **29****,** an output data table associating the new MCSs and new MCS power values with respective users is shown and is used to produce the signals that define the control patch **250** of the frame shown in Figure **24** and transmitted from the control system **20** to the transmit circuitry **24** shown in Figure **5** to cause the transmit circuitry to transmit the control patch using the new MCSs and power values associated with the new MCSs. The frame shown in Figure **24** may be referred to as scheduled data **44.**

### Transmitting scheduled data to Mobile Station

Referring to Figures **1** and **5****,** the scheduled data **44,** is a stream of bits and this stream is scrambled in a manner reducing the peak-to-average power ratio associated with the data using data scrambling logic **46.** A cyclic redundancy check (CRC) for the scrambled data is determined and appended to the scrambled data using CRC adding logic **48.** Next, channel coding is performed using a channel encoder **50** to effectively add redundancy to the data to facilitate recovery and error correction at the mobile stations **16.** The channel coding for a particular one of the mobile stations **16** is based on the CQI associated with the particular mobile station. In some implementations, the channel encoder **50** uses known Turbo encoding techniques. The encoded data is then processed by rate matching logic **52** to compensate for data expansion associated with encoding.

Bit interleaver logic **54** systematically reorders the bits in the encoded data to minimize loss of consecutive data bits. The re-ordered data bits are systematically mapped into corresponding symbols depending on the chosen baseband modulation by mapping logic **56.** Preferably, Quadrature Amplitude Modulation (QAM) or Quadrature Phase Shift Key (QPSK) modulation is used. The degree of modulation is chosen based on the CQI associated with the particular mobile station as discussed above in connection with Figures **14-29****.** The symbols may be systematically reordered using symbol interleaver logic **58** to further bolster the immunity of the transmitted signal to periodic data loss caused by frequency selective fading.

At this point, groups of bits have been mapped into symbols representing locations in an amplitude and phase constellation. When spatial diversity is desired, blocks of symbols are then processed by space-time block code (STC) encoder logic **60,** which modifies the symbols in a fashion making the transmitted signals more resistant to interference and more readily decoded at the mobile stations **16.** The STC encoder logic **60** will process the incoming symbols and provide "n" outputs corresponding to the number of the transmit antennas **28** for the base station **14.** The control system **20** and/or the baseband processor **22** as described above with respect to Figure **5** will provide a mapping control signal to control the STC encoder. At this point, assume the symbols for the "n" outputs are representative of the data to be transmitted and capable of being recovered by the mobile stations **16.**

For the present example, assume the base station (**14** in Figure **1**) has two of the transmit antennas **28** (n=**2**) and the STC encoder logic **60** provides two output streams of symbols. Each of the output streams of symbols is sent to a corresponding output path **61, 63,** illustrated separately for ease of understanding. Those skilled in the art will recognize that one or more processors may be used to provide such digital signal processing, alone or in combination with other processing described herein. In each output path an IFFT processor **62** will operate on symbols provided to it to perform an inverse Fourier Transform. The output of the IFFT processor **62** provides symbols in the time domain. The time domain symbols also known as OFDM symbols are grouped into frames, by assigning a prefix by prefix insertion function **64.** The resultant frame is up-converted in the digital domain to an intermediate frequency and converted to an analog signal via respective digital up-conversion (DUC) and digital-to-analog (D/A) conversion circuitry **66.** The resultant (analog) signals from each output path are then simultaneously modulated at the desired RF frequency, amplified, and transmitted via RF circuitry **68** and the transmit antennas **28** to one of the mobile stations **16.** Notably, pilot signals known by the intended one of the mobile stations **16** are scattered among the sub-carriers. The mobile stations **16,** which are discussed in detail below, will use the pilot signals for channel estimation.

### Reception of signals at the Mobile Station

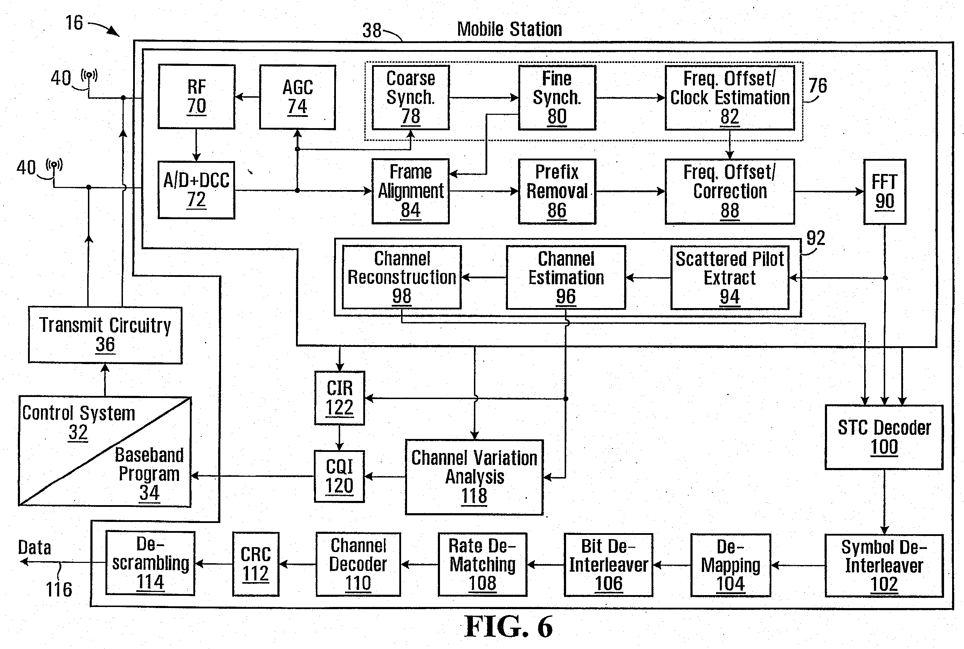

Reference is now made to Figure **6** to illustrate reception of the transmitted signals by one of the mobile stations **16,** either directly from one of the base stations (**14** in Figure **1**) or with the assistance of one of the relay stations (**15** in Figure **1**). Upon arrival of the transmitted signals at each of the receive antennas **40** of one of the mobile stations **16,** the respective signals are demodulated and amplified by corresponding RF circuitry **70.** For the sake of conciseness and clarity, only one of the two receive paths is described and illustrated in detail. Analog-to-digital (A/D) converter and down-conversion circuitry **72** digitizes and downconverts the analog signal for digital processing. The resultant digitized signal may be used by automatic gain control circuitry (AGC) **74** to control the gain of amplifiers in the RF circuitry **70** based on the received signal level.

Initially, the digitized signal is provided to synchronization logic shown generally at **76,** which includes coarse synchronization function **78,** which buffers several OFDM symbols and calculates an auto-correlation between the two successive OFDM symbols. A resultant time index corresponding to the maximum of the correlation result determines a fine synchronization search window, which is used by fine synchronization function **80** to determine a precise framing starting position based on the headers. The output of the fine synchronization function **80** facilitates frame acquisition by frame alignment logic **84.** Proper framing alignment is important so that subsequent FFT processing provides an accurate conversion from the time domain to the frequency domain. The fine synchronization algorithm is based on the correlation between the received pilot signals carried by the headers and a local copy of the known pilot data. Once frame alignment acquisition occurs, the prefix of the OFDM symbol is removed with prefix removal logic **86** and resultant samples are sent to a frequency offset/correction function **88,** which compensates for the system frequency offset caused by the unmatched local oscillators in a transmitter and a receiver. Preferably, the synchronization logic **76** includes a frequency offset and clock estimation function **82,** which uses the headers to help estimate frequency offset and clock offset in the transmitted signal and provide those estimates to the frequency offset/correction function **88** to properly process OFDM symbols.

At this point, the OFDM symbols in the time domain are ready for conversion to the frequency domain by an FFT processing function **90.** The result is a set of frequency domain symbols, which are sent to a processing function **92.** The processing function **92** extracts the scattered pilot signal using a scattered pilot extraction function **94,** determines a channel estimate based on the extracted pilot signal using a channel estimation function **96,** and provides channel responses for all sub-carriers using a channel reconstruction function **98.** In order to determine a channel response for each of the sub-carriers, the pilot signal is essentially multiple pilot symbols that are scattered among the data symbols throughout the OFDM sub-carriers in a known pattern in both time and frequency.

Continuing with Figure **6****,** the processing logic compares the received pilot symbols with the pilot symbols that are expected in certain sub-carriers at certain times to determine a channel response for the sub-carriers in which pilot symbols were transmitted. The results are interpolated to estimate a channel response for most, if not all, of the remaining sub-carriers for which pilot symbols were not provided. The actual and interpolated channel responses are used to estimate an overall channel response, which includes the channel responses for most, if not all, of the sub-carriers in the OFDM channel.

The frequency domain symbols and channel reconstruction information, which are derived from the channel responses for each receive path are provided to an STC decoder **100,** which provides STC decoding on both received paths to recover the transmitted symbols. The channel reconstruction information provides equalization information to the STC decoder **100** sufficient to remove the effects of the transmission channel when processing the respective frequency domain symbols.

The recovered symbols are placed back in order using symbol de-interleaver logic **102,** which corresponds to the symbol interleaver logic **58** of the transmitter. The de-interleaved symbols are then demodulated or de-mapped to a corresponding bitstream using de-mapping logic **104.** The bits are then de-interleaved using bit de-interleaver logic **106,** which corresponds to the bit interleaver logic **54** of the transmitter architecture. The de-interleaved bits are then processed by rate de-matching logic **108** and presented to channel decoder logic **110** to recover the initially scrambled data and the CRC checksum. Accordingly, CRC logic **112** removes the CRC checksum, checks the scrambled data in traditional fashion, and provides it to the de-scrambling logic **114** for de-scrambling using the known base station de-scrambling code to re-produce the originally transmitted data as data **116.**

Still referring to Figure **6****,** in parallel with recovering the data **116,** a CQI, or at least information sufficient to create a CQI at each of the base stations **14,** is determined and transmitted to each of the base stations. As noted above, the CQI may be a function of the carrier-to-interference ratio (CR), as well as the degree to which the channel response varies across the various sub-carriers in the OFDM frequency band. For this embodiment, the channel gain for each sub-carrier in the OFDM frequency band being used to transmit information is compared relative to one another to determine the degree to which the channel gain varies across the OFDM frequency band. Although numerous techniques are available to measure the degree of variation, one technique is to calculate the standard deviation of the channel gain for each sub-carrier throughout the OFDM frequency band being used to transmit data.

In some embodiments, the relay stations may operate in a time division manner using only one radio, or alternatively include multiple radios.

While the above provides specific examples of a communication system in which embodiments of the invention are implemented, it is to be understood that embodiments of the invention can be implemented with communications systems having architectures that are different than the specific example provided above, but that operate in a manner consistent with the implementation of the embodiments described herein.

While specific embodiments of the invention have been described and illustrated, such embodiments should be considered illustrative of the invention only and not as limiting the invention as construed in accordance with the accompanying claims.

## Claims

1. A method of optimizing downlink communications between a base station (14) and mobile stations (16) in a wireless communication system, the method comprising:
acquiring (212) user identifiers and quality values for said mobile stations that are associated with registered users of the system, the quality values including positional information or signal-to-noise ratio values associated with the mobile stations;
associating (216) modulation and coding scheme, MCS, power values with respective said users in response to respective said quality values;
establishing (228) a power pool buffer in a memory of the base station, wherein contents of the power pool buffer represent excess power being used by mobile stations served by the base station;
identifying (₂₃₀) users that have an MCS power value greater than a reference MCS power value as high power users;
calculating (232) a power difference for each of said high power users, said power difference being a difference between the quality value associated with said each of said high power users and a reference quality value associated with said reference MCS power value respectively;
accumulating (238) in said contents of the power pool buffer, said power differences associated with respective said high power users, by summing said power differences;
identifying (242) users that have an MCS power value below said reference MCS power value as low power users;
associating (244) increased quality values with at least a portion of said low power users while depleting said contents of the power pool buffer by corresponding amounts until said contents of the power pool buffer is depleted;
determining (246) new MCSs for said portion of said low power users based on said increased quality values; and
causing (248) control information to be transmitted to said low power users using modulation and coding schemes identified by corresponding said new MCSs at power levels associated with said new MCSs.

2. The method of claim 1 wherein said signal to noise ratio is represented by signal to noise values received from mobile stations (16).

3. The method of claim 1 wherein associating (216) MCS power values comprises assigning MCS power values according to ranges in which said quality values reside.

4. The method of claim 1 further comprising sorting user identifiers in order of increasing or decreasing quality values.

5. The method of claim 1 wherein associating (244) said increased quality values to the portion of said low power users comprises associating said reference quality value to said low power users in order of increasing quality.

6. The method of claim i wherein said reference MCS power value is a highest MCS power value required for downlink control.

7. The method of claim i wherein causing (248) control information to be transmitted to said low power users comprises causing a control system of the base station to produce signals that define a control patch of a frame for transmission to said registered users according to said new MCSs at said power values associated with said new MCSs.

8. The method of claim 1 further comprising assigning a reference MCS corresponding to said reference MCS power value to said high power users and causing communications with said high power users to be conducted using said reference MCS.

9. A computer program product, comprising computer readable medium encoded with codes for directing a processor circuit to execute the method of any one of claims 1-8.

10. An apparatus for optimizing downlink communications between a base station (14) and mobile stations (16) in a wireless communication system, the apparatus comprising:
an input (202) for receiving user identifiers and quality values for said mobile stations that are associated with registered users of the system, the quality values including positional information or signal-to-noise ratio values associated with the mobile stations;
a processor circuit (21) in communication with said input, said processor circuit being operably configured to:
associate (216) modulation and coding scheme, MCS, power values with respective said users in response to respective said quality values;
establishing (228) a power pool buffer in a memory of the base station, wherein contents of the power pool buffer represent excess power being used by mobile stations served by the base station;
identify (₂₃₀) users that have an MCS power value greater than a reference MCS power value as high power users;
calculate (232) a power difference for each of said high power users, said power difference being a difference between the quality value associated with said each of said high power users and a reference quality value associated with said reference MCS power value respectively;
accumulate (238) in said contents of the power pool buffer, said power differences associated with respective said high power users, by summing said power differences;
identify (242) users that have an MCS power value below said reference MCS power value as low power users;
associate (244) increased quality values with at least a portion of said low power users while depleting said contents of the power pool buffer by corresponding amounts until said contents of the power pool buffer is depleted;
determine (246) new MCSs for said portion of said low power users based on said increased quality values; and
an output (24) in communication with said processor circuit for providing signals for causing control information to be transmitted to said low power users using modulation and coding schemes identified by corresponding said new MCSs at power levels associated with said new MCSs.

11. The apparatus of claim 10 wherein said signal to noise ratio is represented by signal to noise values received from mobile stations (16).

12. The apparatus of claim 10 wherein said processor circuit (21) is operably configured to associate (216) MCS power values to users according to ranges in which said quality values reside.

13. The apparatus of claim 10 wherein said processor circuit (21) is operably configured to sort user identifiers in order of increasing or decreasing quality values.

14. The apparatus of claim 10 wherein associating said increased quality values to the portion of said low power users comprises associating said reference quality value to said low power users in order of increasing quality.

15. The apparatus of claim 10 wherein said reference MCS power value is a highest MCS power value required for downlink control.

16. The apparatus of claim 10 wherein said processor circuit (21) is operably configured to produce signals representing a control patch of a frame for transmission to said registered users according to said new MCSs at said power values associated with said new MCSs.

17. The apparatus of claim 16 wherein said processor circuit (21) is operably configured to assign a reference MCS corresponding to said reference MCS power value to said high power users and to cause the signals representing the control channel of the frame to be transmitted to said high power users using said reference MCS and associated power value.

18. A base station (14) in a wireless communication system comprising the apparatus of any one of claims 10-17.

## Patentansprüche

1. Verfahren zum Optimieren von Downlink-Kommunikationen zwischen einer Basisstation (14) und mobilen Stationen (16) in einem drahtlosen Kommunikationssystem, das Verfahren umfassend:
Erlangen (212) von Benutzer-Identifizierern und Qualitätswerten für die mobilen Stationen, die mit registrierten Benutzern des Systems assoziiert sind, wobei die Qualitätswerte Positionsinformation oder Signal-zu-Rausch-Verhältniswerte beinhalten, die mit den mobilen Stationen assoziiert sind;
Assoziieren (216) von Leistungswerten eines Modulations- und Codierungsschemas, MCS, mit den entsprechenden Benutzer in Reaktion auf die entsprechenden Qualitätswerte;
Einrichten (228) eines Leistungspoolpuffers in einem Speicher der Basisstation, wobei Inhalte des Leistungspoolpuffers Überschussleistung repräsentieren, die durch mobile Stationen verwendet wird, die durch die Basisstation bedient werden;
Identifizieren (₂₃₀) von Benutzern, die einen MCS-Leistungswert haben, der größer ist als ein Referenz-MCS-Leistungswert, als Hochleistungsbenutzer;
Berechnen (232) einer Leistungsdifferenz für jeden der Hochleistungsbenutzer, wobei die Leistungsdifferenz eine Differenz ist zwischen dem Qualitätswert, der mit jedem der Hochleistungsbenutzer assoziiert ist, und einem Referenzqualitätswert, der mit dem Referenz-MCS-Leistungswert assoziiert ist;
Akkumulieren (238) in den Inhalten des Leistungspoolpuffers der Leistungsdifferenzen, die mit den Hochleistungsbenutzern assoziiert sind, durch Summieren der Leistungsdifferenzen;
Identifizieren (242) von Benutzern, die einen MCS-Leistungswert unter dem Referenz-MCS-Leistungswert haben, als Niedrigleistungsbenutzer;
Assoziieren (244) erhöhter Qualitätswerte mit zumindest einem Teil der Niedrigleistungsbenutzer und gleichzeitiges Entleeren der Inhalte des Leistungspoolpuffers um entsprechende Beträge, bis die Inhalte des Leistungspoolpuffers entleert sind;
Bestimmen (246) neuer MCSs für den Teil der Niedrigleistungsbenutzer basierend auf den erhöhten Qualitätswerten; und
Veranlassen (248), dass Steuerinformation zu übertragen ist an die Niedrigleistungsbenutzer unter Verwendung von Modulations- und Codierungsschemata, die durch die entsprechenden neuen MCSs identifiziert werden, mit Leistungspegeln, die mit den neuen MCSs assoziiert sind.

2. Verfahren nach Anspruch 1, wobei das Signal-zu-Rauschverhältnis repräsentiert wird durch Signal-zu-Rauschwerte, die von den mobilen Stationen (16) empfangen wurden.

3. Verfahren nach Anspruch 1, wobei das Assoziieren (216) von MCS-Leistungswerten ein Zuweisen von MCS-Leistungswerten entsprechend Bereichen, in denen die Qualitätswerte liegen, umfasst.

4. Verfahren nach Anspruch 1, ferner umfassend ein Sortieren von Benutzer-Identifizierern, um Qualitätswerte zu erhöhen oder zu verringern.

5. Verfahren nach Anspruch 1, wobei das Assoziieren (244) der erhöhten Qualitätswerte mit dem Teil der Niedrigleistungsbenutzer ein Assoziieren der Referenzqualitätswerte mit den Niedrigleistungsbenutzern umfasst, um eine Qualität zu erhöhen.

6. Verfahren nach Anspruch 1, wobei der Referenz-MCS-Leistungswert ein höchster MCS-Leistungswert ist, der für Downlink-Steuerung notwendig ist.

7. Verfahren nach Anspruch 1, wobei das Veranlassen (248), dass Steuerinformation zu übertragen ist an die Niedrigleistungsbenutzer ein Veranlassen umfasst, dass ein Steuersystem der Basisstation Signale produziert, die einen Steuerungspatch eines Rahmens zur Übertragung an die registrierten Benutzer definiert gemäß den neuen MCSs mit den Leistungswerten, die mit den neuen MCSs assoziiert sind.

8. Verfahren nach Anspruch 1, ferner umfassend ein Zuweisen eines Referenz-MCS entsprechend dem Referenz-MCS-Leistungswert zu den Hochleistungsbenutzern und Veranlassen, dass Kommunikationen mit den Hochleistungsbenutzern geführt werden unter Verwendung der Referenz-MCS.

9. Computerprogrammprodukt, umfassend ein Computer-lesbares Medium, das codiert ist mit Code zum Anweisen eines Prozessors, das Verfahren nach einem der Ansprüche 1-8 auszuführen.

10. Vorrichtung zum Optimieren von Downlink-Kommunikationen zwischen einer Basisstation (14) und mobilen Stationen (16) in einem drahtlosen Kommunikationssystem, die Vorrichtung umfassend:
eine Eingabe (202) zum Empfangen von Benutzer-Identifizierern und Qualitätswerten für die mobilen Stationen, die mit registrierten Benutzern des Systems assoziiert sind, wobei die Qualitätswerte Positionsinformation oder Signal-zu-Rausch-Verhältniswerte beinhalten, die mit den mobilen Stationen assoziiert sind;
eine Prozessorschaltung (21) in Kommunikation mit der Eingabe, wobei die Prozessorschaltung operativ konfiguriert ist zum:
Assoziieren (216) von Leistungswerten eines Modulations- und Codierungsschemas, MCS, mit den entsprechenden Benutzern in Reaktion auf die entsprechenden Qualitätswerte;
Einrichten (228) eines Leistungspoolpuffers in einem Speicher der Basisstation, wobei Inhalte des Leistungspoolpuffers Überschussleistung repräsentieren, die durch mobile Stationen verwendet wird, die durch die Basisstation bedient werden;
Identifizieren (₂₃₀) von Benutzern, die einen MCS-Leistungswert haben, der größer ist als ein Referenz-MCS-Leistungswert, als Hochleistungsbenutzer;
Berechnen (232) einer Leistungsdifferenz für jeden der Hochleistungsbenutzer, wobei die Leistungsdifferenz eine Differenz ist zwischen dem Qualitätswert, der mit jedem der Hochleistungsbenutzer assoziiert ist, und einem Referenzqualitätswert, der mit dem Referenz-MCS-Leistungswert assoziiert ist;
Akkumulieren (238) in den Inhalten des Leistungspoolpuffers der Leistungsdifferenzen, die mit den Hochleistungsbenutzern assoziiert sind, durch Summieren der Leistungsdifferenzen;
Identifizieren (242) von Benutzern, die einen MCS-Leistungswert unter dem Referenz-MCS-Leistungswert haben, als Niedrigleistungsbenutzer;
Assoziieren (244) erhöhter Qualitätswerte mit zumindest einem Teil der Niedrigleistungsbenutzer und gleichzeitiges Entleeren der Inhalte des Leistungspoolpuffers um entsprechende Beträge, bis die Inhalte des Leistungspoolpuffers entleert sind;
Bestimmen (246) neuer MCSs für den Teil der Niedrigleistungsbenutzer basierend auf den erhöhten Qualitätswerten; und
eine Ausgabe (24) in Kommunikation mit dem Prozessorschaltung zum Bereitstellen von Signalen zum Veranlassen, dass Steuerinformation zu übertragen ist an die Niedrigleistungsbenutzer unter Verwendung von Modulations- und Codierungsschemata, die durch die entsprechenden neuen MCSs identifiziert werden, mit Leistungspegeln, die mit den neuen MCSs assoziiert sind.

11. Vorrichtung nach Anspruch 10, wobei das Signal-zu-Rauschverhältnis repräsentiert wird durch Signal-zu-Rauschwerte, die von den mobilen Stationen (16) empfangen wurden.

12. Vorrichtung nach Anspruch 10, wobei die Prozessorschaltung (21) operativ konfiguriert ist zum Assoziieren (216) von MCS-Leistungswerten mit Benutzern entsprechend Bereichen, in denen die Qualitätswerte liegen.

13. Vorrichtung nach Anspruch 10, wobei die Prozessorschaltung (21) operativ konfiguriert ist zum Sortieren von Benutzer-Identifizierern, um Qualitätswerte zu erhöhen oder zu verringern.

14. Vorrichtung nach Anspruch 10, wobei das Assoziieren der erhöhten Qualitätswerte mit dem Teil der Niedrigleistungsbenutzer ein Assoziieren der Referenzqualitätswerte mit den Niedrigleistungsbenutzern umfasst, um eine Qualität zu erhöhen.

15. Vorrichtung nach Anspruch 10, wobei der Referenz-MCS-Leistungswert ein höchster MCS-Leistungswert ist, der für Downlink-Steuerung notwendig ist.

16. Vorrichtung nach Anspruch 10, wobei die Prozessorschaltung (21) operativ konfiguriert ist zum Produzieren von Signalen, die einen Steuerungspatch eines Rahmens zur Übertragung an die registrierten Benutzer darstellen gemäß den neuen MCSs mit den Leistungswerten, die mit den neuen MCSs assoziiert sind.

17. Vorrichtung nach Anspruch 10, wobei die Prozessorschaltung (21) operativ konfiguriert ist zum Zuweisen eines Referenz-MCS entsprechend dem Referenz-MCS-Leistungswert zu den Hochleistungsbenutzern und zum Veranlassen, dass die Signale, die einen Steuerungskanal für den Rahmen darstellen, an die Hochleistungsbenutzer zu übertragen sind gemäß den Referenz-MCS und dem assoziierten Leistungswert.

18. Basisstation (14) in einem drahtlosen Kommunikationssystem, umfassend die Vorrichtung nach einem der Ansprüche 10-17.

## Revendications

1. Procédé d'optimisation de communications de liaison descendante entre une station de base (14) et des stations mobiles (16) dans un système de communication sans fil, le procédé comprenant :
l'acquisition (212) d'identifiants d'utilisateur et de valeurs de qualité pour lesdites stations mobiles qui sont associées aux utilisateurs enregistrés du système, les valeurs de qualité incluant des informations de position ou des valeurs de rapport signal sur bruit associées aux stations mobiles ;
l'association (216) de valeurs de puissance de schéma de modulation et de codage, MCS, auxdits utilisateurs respectifs en réponse auxdites valeurs de qualité respectives ;
l'établissement (228) d'un tampon de regroupement de puissance dans une mémoire de la station de base, le contenu du tampon de regroupement de puissance représentant la puissance excédentaire utilisée par les stations mobiles desservies par la station de base ;
l'identification (₂₃₀) des utilisateurs qui ont une valeur de puissance MCS supérieure à une valeur de puissance MCS de référence comme des utilisateurs de puissance élevée ;
le calcul (232) d'une différence de puissance pour chacun desdits utilisateurs de puissance élevée, ladite différence de puissance étant une différence entre la valeur de qualité associée à chacun desdits utilisateurs de puissance élevée et une valeur de qualité de référence associée à ladite valeur de puissance MCS de référence respectivement ;
l'accumulation (238) dans ledit contenu du tampon de regroupement de puissance, desdites différences de puissance associées auxdits utilisateurs de puissance élevée respectifs, en sommant lesdites différences de puissance ;
l'identification (242) des utilisateurs qui ont une valeur de puissance MCS inférieure à ladite valeur de puissance MCS de référence comme des utilisateurs de faible puissance ;
l'association (244) de valeurs de qualité accrues à au moins une partie desdits utilisateurs de faible puissance tout en vidant ledit contenu du tampon de regroupement de puissance de quantités correspondantes jusqu'à ce que ledit contenu du tampon de regroupement de puissance soit épuisé ;
la détermination (246) de nouveaux MCS pour ladite partie desdits utilisateurs de faible puissance sur la base desdites valeurs de qualité accrues ; et
l'exécution (248) de la transmission d'informations de contrôle auxdits utilisateurs de faible puissance au moyen des schémas de modulation et de codage identifiés par lesdits nouveaux MCS correspondant aux niveaux de puissance associés auxdits nouveaux MCS.

2. Procédé selon la revendication 1, dans lequel ledit rapport signal sur bruit est représenté par des valeurs signal sur bruit reçues de stations mobiles (16).

3. Procédé selon la revendication 1, dans lequel l'association (216) de valeurs de puissance MCS comprend l'affectation de valeurs de puissance MCS selon des plages dans lesquelles résident lesdites valeurs de qualité.

4. Procédé selon la revendication 1, comprenant en outre le tri des identifiants d'utilisateurs par ordre de valeurs de qualité croissantes ou décroissantes.

5. Procédé selon la revendication 1, dans lequel l'association (244) desdites valeurs de qualité accrues à la partie desdits utilisateurs de faible puissance comprend l'association de ladite valeur de qualité de référence auxdits utilisateurs de faible puissance par ordre de qualité croissante.

6. Procédé selon la revendication 1, dans lequel ladite valeur de puissance MCS de référence est une valeur de puissance MCS la plus élevée requise pour le contrôle de liaison descendante.

7. Procédé selon la revendication 1, dans lequel l'exécution (248) de la transmission des informations de contrôle auxdits utilisateurs de faible puissance comprend le fait d'amener un système de contrôle de la station de base à produire de signaux qui définissent un correctif de contrôle d'une trame pour transmission auxdits utilisateurs enregistrés selon lesdits nouveaux MCS auxdites valeurs de puissance associées auxdits nouveaux MCS.

8. Procédé selon la revendication 1, comprenant en outre l'affectation d'un MCS de référence correspondant à ladite valeur de puissance de MCS de référence auxdits utilisateurs de puissance élevée et le fait d'exécuter les communications avec lesdits utilisateurs de puissance élevée au moyen dudit MCS de référence.

9. Programme-produit informatique, comprenant un support lisible par ordinateur codé avec des codes pour amener un circuit de traitement à exécuter le procédé selon l'une quelconque des revendications 1 à 8.

10. Appareil pour optimiser les communications de liaison descendante entre une station de base (14) et des stations mobiles (16) dans un système de communication sans fil, l'appareil comprenant :
une entrée (202) pour recevoir des identifiants d'utilisateurs et des valeurs de qualité pour lesdites stations mobiles qui sont associées aux utilisateurs enregistrés du système, les valeurs de qualité incluant des informations de position ou des valeurs de rapport signal sur bruit associées aux stations mobiles ;
un circuit de traitement (21) en communication avec ladite entrée, ledit circuit de traitement étant configuré de manière opérationnelle pour :
associer (216) des valeurs de puissance de schéma de modulation et de codage, MCS, auxdits utilisateurs respectifs en réponse auxdites valeurs de qualité respectives ;
établir (228) un tampon de regroupement de puissance dans une mémoire de la station de base, le contenu du tampon de regroupement de puissance représentant la puissance excédentaire utilisée par les stations mobiles desservies par la station de base ;
identifier (₂₃₀) des utilisateurs qui ont une valeur de puissance MCS supérieure à une valeur de puissance MCS de référence comme des utilisateurs de puissance élevée ;
calculer (232) d'une différence de puissance pour chacun desdits utilisateurs de puissance élevée, ladite différence de puissance étant une différence entre la valeur de qualité associée à chacun desdits utilisateurs de puissance élevée et une valeur de qualité de référence associée à ladite valeur de puissance MCS de référence respectivement ;
accumuler (238) dans ledit contenu du tampon de regroupement de puissance lesdites différences de puissance associées auxdits utilisateurs de puissance élevée respectifs, en sommant lesdites différences de puissance ;
identifier (242) les utilisateurs qui ont une valeur de puissance MCS inférieure à ladite valeur de puissance MCS de référence comme des utilisateurs de faible puissance ;
associer (244) les valeurs de qualité accrues à au moins une partie desdits utilisateurs de faible puissance tout en vidant ledit contenu du tampon de regroupement de puissance de quantités correspondantes jusqu'à ce que ledit contenu du tampon de regroupement de puissance soit épuisé ;
déterminer (246) de nouveaux MCS pour ladite partie desdits utilisateurs de faible puissance sur la base desdites valeurs de qualité accrues ; et
une sortie (24) en communication avec ledit circuit de traitement pour fournir des signaux pour assurer la transmission des informations de contrôle auxdits utilisateurs de faible puissance au moyen de schémas de modulation et de codage identifiés par lesdits nouveaux MCS correspondants aux niveaux de puissance associés auxdits nouveaux MCS.

11. Appareil selon la revendication 10, dans lequel ledit rapport signal sur bruit est représenté par des valeurs signal sur bruit reçues de stations mobiles (16).

12. Procédé selon la revendication 10, dans lequel ledit circuit de traitement (21) est configuré de manière opérationnelle pour associer (216) les valeurs de puissance MCS aux utilisateurs selon des plages dans lesquelles résident lesdites valeurs de qualité.

13. Appareil selon la revendication 10, dans lequel ledit circuit de traitement (21) est configuré de manière opérationnelle pour trier les identifiants d'utilisateurs par ordre de valeurs de qualité croissantes ou décroissantes.

14. Appareil selon la revendication 10, dans lequel l'association desdites valeurs de qualité accrues à la partie desdits utilisateurs de faible puissance comprend l'association de ladite valeur de qualité de référence auxdits utilisateurs de faible puissance par ordre de qualité croissante.

15. Appareil selon la revendication 10, dans lequel ladite valeur de puissance MCS de référence est une valeur de puissance MCS la plus élevée requise pour le contrôle de liaison descendante.

16. Appareil selon la revendication 10, dans lequel ledit circuit de traitement (21) est configuré de manière opérationnelle pour produire des signaux représentant un correctif de contrôle d'une trame pour transmission auxdits utilisateurs enregistrés selon lesdits nouveaux MCS auxdites valeurs de puissance associées auxdits nouveaux MCS.

17. Appareil selon la revendication 16, dans lequel ledit circuit de traitement (21) est configuré de manière opérationnelle pour affecter un MCS de référence correspondant à ladite valeur de puissance de MCS de référence auxdits utilisateurs de puissance élevée et pour assurer la transmission des signaux représentant le canal de contrôle de la trame auxdits utilisateurs de puissance élevée au moyen dudit MCS de référence et de la valeur de puissance associée.

18. Station de base (14) dans un système de communication sans fil comprenant l'appareil selon l'une quelconque des revendications 10 à 17.
